# DEMANDE DE BREVET EUROPEEN

(11) **EP 4 729 224 A2**
(43) Date de publication de la demande: **22.04.2026**
(21) Numéro de dépôt: 26163188.1
(22) Date de dépôt: 07.06.2019
(51) Int. Cl.: B23K 11/00

(54) **PROCÉDÉ D'ASSEMBLAGE D'UNE PREMIÈRE PIÈCE ET D'UNE DEUXIÈME PIÈCE PAR L'INTERMÉDIAIRE D'UN INSERT**

(30) Priorité: 08.06.2018 FR 1854992
(62) Demande divisionnaire de: 19740641.6
(71) Demandeur: Grojean, Maxime, 55200 Commercy (FR)
(72) Inventeur: Grojean, Maxime, 55200 Commercy (FR)
(74) Mandataire: Germain Maureau

(57) **Abrégé**

Ce procédé permet l'assemblage d'une première pièce (10) et d'une deuxième pièce par l'intermédiaire d'un insert (30) comprenant une tête (31) destinée à venir en appui sur la première pièce (10) et un corps (32) comprenant une partie d'extrémité (322) destinée à être soudée à la deuxième pièce. Le procédé comprend, avant fixation de la partie d'extrémité (322) du corps (32) de l'insert (30) sur la deuxième pièce, une étape de conformation de la première ou de la deuxième pièce (10) pour ménager une zone (50) de découplage autour de cette partie d'extrémité (322).

## Description

La présente invention concerne procédé d'assemblage d'une première pièce et d'une deuxième pièce par l'intermédiaire d'un insert.

Il est connu, notamment dans le domaine des transports terrestres ou aériens, de réaliser des assemblages multi-matériaux intégrant aussi bien des composants tels que l'acier, l'aluminium, le magnésium, un plastique thermodurcissable ou thermoplastique, un composite renforcé de fibres de verre ou de carbone tissées ou non. Ces assemblages multi-matériaux répondent aux problématiques d'allégement des véhicules afin de réduire la consommation d'énergie ou d'améliorer le comportement dynamique du véhicule, de renforcement structurel afin de satisfaire aux exigences en matière de sécurité, ou encore de réduction du nombre de composants dans les véhicules.

Cependant, les assemblages multi-matériaux sont relativement difficiles à mettre en œuvre compte-tenu de la nature même de ces assemblages, nécessitant de fixer de manière aisée, économique, durable et robuste des pièces faites de matériaux aux propriétés différentes.

Il est connu de réaliser des assemblages multi-matériaux par exemple par collage. Cependant, cette solution implique généralement un temps de réticulation ou de séchage relativement important et peut aussi présenter l'inconvénient d'une altération des performances de l'assemblage sous l'effet du vieillissement, si bien que son application reste limitée à des cas bien spécifiques.

Il est également connu de réaliser des assemblages multi-matériaux au moyen de vis fluo-extrudeuses, de rivets, ou encore de clous. Cependant, ces solutions ne permettent pas la réalisation d'assemblage incluant notamment des tôles acier à hautes performances. Un autre inconvénient est l'existence d'une protubérance saillante résiduelle après assemblage.

Il est enfin connu de réaliser des assemblages via une technique de soudage par points, notamment lors d'une opération de ferrage. Le soudage par points ou soudage électrique par résistance est une solution d'assemblage qui présente l'avantage d'être à la fois économique et performante sur le plan mécanique. Toutefois, cette technique est limitée à l'assemblage de deux éléments en matériau de même nature, comme typiquement deux tôles en acier. Cette technique s'avère complexe à mettre en œuvre dès lors que l'assemblage à réaliser comprend des éléments aux matériaux de nature différente, comme par exemple un assemblage aluminium-acier, acier-composite, aluminium-plastique, etc. Pour y remédier, il est connu d'utiliser des inserts, aussi appelés patchs de soudage, qui sont positionnés dans l'un des éléments à assembler et sur lesquels l'électrode de soudage est appliquée pour réaliser l'assemblage. Ces patchs de soudage permettent donc de réaliser des assemblages multi-matériaux.

Cependant, les patchs de soudage présentent plusieurs inconvénients. Les dimensions, notamment le diamètre, des patchs de soudage sont généralement importantes. En effet, cela permet d'assurer l'accostage des électrodes d'une pince à souder sur les patchs plutôt que sur la pièce dans laquelle est inséré le patch, sans pour cela adjoindre un système de positionnement par vision sur les bras de soudage robotisés. De plus, cela permet de dissiper la chaleur générée lors du soudage avant que cette chaleur n'atteigne et ne fasse fondre ou n'altère le matériau de la pièce dans laquelle est inséré le patch de soudage. Ce dimensionnement relativement important implique un coût matière élevé, ainsi qu'une masse accrue, à rebours de la problématique actuelle d'allègement des véhicules. De surcroît, l'intégration des patchs de soudage dans la pièce à assembler nécessite l'aménagement de trous de diamètre adapté à ces patchs de soudage, donc également de diamètre relativement important, ce qui tend à l'affaiblement de la pièce recevant les patchs de soudage. Aussi, il reste complexe d'intégrer efficacement des patchs de soudage dans des pièces par exemple en matériau plastique ou composite.

Aussi, l'invention vise à pallier tout ou partie de ces inconvénients en proposant un procédé d'assemblage d'une première pièce et d'une deuxième pièce de manière robuste, rapide et économique.

A cet effet, l'invention a pour objet un procédé d'assemblage d'une première pièce et d'une deuxième pièce par l'intermédiaire d'un insert comprenant une tête destinée à venir en appui sur la première pièce et un corps comprenant une partie d'extrémité destinée à être soudée à la deuxième pièce, caractérisé en ce que le procédé comprend, avant fixation de la partie d'extrémité du corps de l'insert sur la deuxième pièce, une étape de conformation de la première ou de la deuxième pièce pour ménager une zone de découplage autour de cette partie d'extrémité.

Ainsi, le procédé selon l'invention permet de réaliser un assemblage multi-matériaux par soudage par résistance électrique, cet assemblage étant robuste, à coûts matière limités, réalisable avec des équipements existants de soudage par résistance, ce qui permet aussi de réduire les coûts.

En effet, la zone de découplage thermique autour de la partie d'extrémité, c'est-à-dire autour du point de fusion, permet de limiter une transmission de chaleur à la première pièce. Cela limite le risque d'altérer, sous l'effet de l'élévation de la température, un matériau de la première pièce, ce qui est particulièrement avantageux quand la première pièce comprend un matériau plastique, qui peut être par exemple la matrice d'un composite.

Selon un mode de réalisation, la zone de découplage est une cavité d'air.

Selon un mode de réalisation, la zone de découplage s'étend de manière annulaire autour du corps.

Selon un mode de réalisation, le procédé comprend une étape d'intégration de l'insert dans la première pièce.

Selon un mode de réalisation, l'étape d'intégration de l'insert dans la première pièce et l'étape de conformation de la première pièce en vue de ménager la zone de découplage sont concomitantes.

Selon un mode de réalisation, l'étape d'intégration de l'insert dans la première pièce est antérieure à l'étape de conformation de la première ou de la deuxième pièce en vue de ménager la zone de découplage.

Selon un mode de réalisation, l'étape d'intégration de l'insert dans la première pièce est postérieure à l'étape de conformation de la première ou de la deuxième pièce en vue de ménager la zone de découplage.

Selon un mode de réalisation, l'étape d'intégration comprend une étape de découpe, à travers la première pièce, d'un trou destiné au passage du corps de l'insert.

L'étape de découpe est par exemple réalisée à la fermeture d'un moule ou d'une presse à emboutir.

Selon un mode de réalisation, la zone de découplage est formée par réservation d'un espace libre destiné à recevoir le corps de l'insert.

Selon un mode de réalisation, la zone de découplage est formée par déformation de la première ou de la deuxième pièce.

Selon un mode de réalisation, la partie d'extrémité du corps de l'insert est fixée à la deuxième pièce par soudage électrique par résistance.

Selon un mode de réalisation, la première pièce est réalisée par moulage par injection.

D'autres caractéristiques et avantages de la présente invention ressortiront clairement de la description détaillée ci-après d'un mode de réalisation, donné à titre d'exemple non limitatif, en référence aux dessins annexés dans lesquels :
- Les figures 1A, 1B et 1C sont des vues schématiques illustrant des étapes d'un procédé selon un mode de réalisation de l'invention,
- Les figures 2A, 2B et 2C sont des vues schématiques illustrant des étapes d'un procédé selon un mode de réalisation de l'invention,
- Les figures 3A et 3B sont des vues schématiques illustrant des étapes d'un procédé selon un mode de réalisation de l'invention,
- La figure 4 est une vue schématique illustrant une étape d'un procédé selon un mode de réalisation de l'invention,
- Les figures 5A et 5B sont des vues schématiques illustrant des étapes d'un procédé selon un mode de réalisation de l'invention.

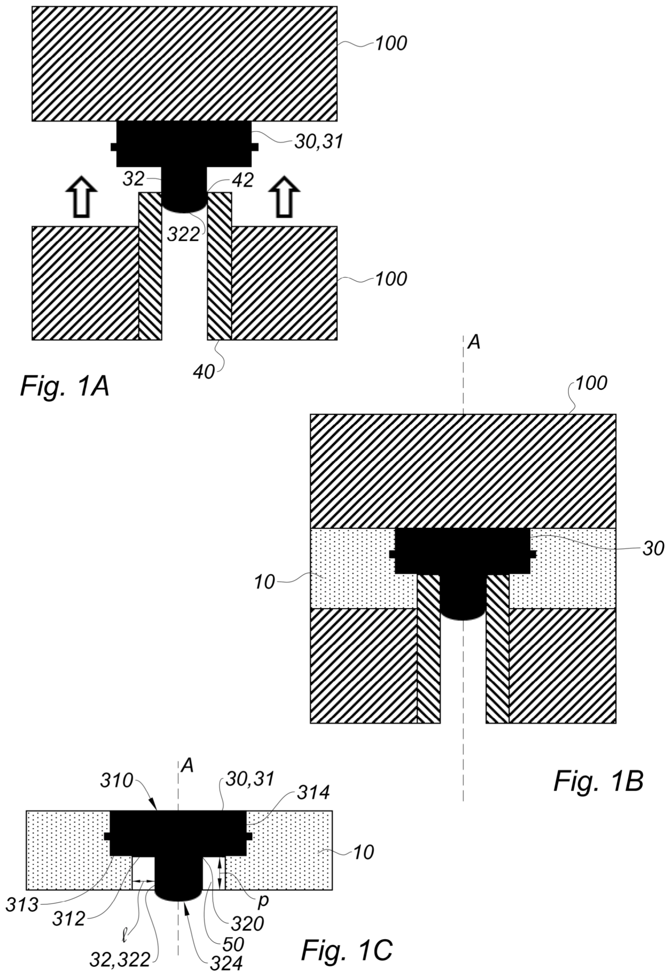

Les figures 1a à 1C montrent des étapes d'un procédé selon un mode de réalisation de l'invention. Le procédé est destiné à l'assemblage d'une première pièce 10 et d'une deuxième pièce 20, qui peuvent être une première tôle et une deuxième tôle, au moyen d'un insert 30.

La première pièce 10 et la deuxième pièce 20 peuvent comprendre des matériaux différents. A titre d'exemple, la première pièce 10 peut être en matériau plastique ou composite, par exemple à matrice thermoplastique ou thermodurcissable et à renforts de type fibres courtes ou longues, tandis que la deuxième pièce 20 peut être en métal, par exemple en acier. Lorsque la première pièce 10 est en un matériau électriquement conducteur, par exemple métallique, l'insert 30 peut être partiellement ou complètement recouvert d'un revêtement électriquement isolant pour éviter un court-circuit.

L'insert 30 comprend une tête 31 et un corps 32 qui s'étend à partir de la tête 31, longitudinalement, selon un axe A orthogonal à la tête 31. La tête 31 peut présenter une forme de disque, ou toute autre forme, par exemple carrée ou une forme ayant une empreinte extérieure de type polygonale ou hexalobulaire. Le corps 32 peut avoir une forme cylindrique, ou éventuellement toute autre forme, par exemple en prisme, à section polygonale. La tête 31 et le corps 32 peuvent être monobloc, ou bien être fixés l'un à l'autre pour former l'insert 30. La tête 31 présente avantageusement une section transverse, c'est-à-dire orthogonale à l'axe A, supérieure à celle du corps 32. De préférence, le corps 32 s'étend de manière centrale à partir de la tête 31 afin que les lignes de courant électrique parcourant l'insert 30 lors de l'opération de soudage électrique par résistance se concentrent au centre de l'insert 30. L'insert 30 en tant que tel est ici dépourvu de moyens de découplage.

La tête 31 comprend avantageusement une face 310 proximale, qui est destinée à recevoir une électrode de soudage (non représentée), et une face 312 distale opposée, à partir de laquelle s'étend ici le corps 32. La face 312 distale délimite avantageusement une surface 313 d'appui destinée à appuyer contre la première pièce 10 en vue de maintenir l'assemblage des première et deuxième pièces 10, 20. La tête 31 a une face 314 latérale qui peut être pourvue de moyens de maintien de la tête 31 dans la première pièce 10, comme par exemple des ergots 316. La face 314 latérale relie les faces 310, 312 proximale et distale.

Bien que ceci ne soit pas représenté, la face 310 proximale peut présenter un ou plusieurs canaux d'évent, par exemple destinés à la circulation d'un fluide de refroidissement. Les canaux d'évent peuvent présenter une ouverture radiale débouchant latéralement et permettant l'évacuation du fluide de refroidissement. La tête 31, notamment la face 310 proximale, peut par ailleurs comprendre une surface d'engagement, par exemple orthoradiale ou à composante orthoradiale, configurée pour recevoir un outil, par exemple un tournevis ou une clé, en vue d'appliquer à la tête 31 un effort, notamment un couple, destiné à rompre la fixation de l'insert 30 sur la deuxième pièce 20. Cette surface d'engagement peut correspondre à une paroi latérale du ou des canaux d'évent ou à une portion de la face 314 latérale

Le corps 32 de l'insert 30 présente une partie 320 proximale, qui peut être solidaire de la tête 31, en particulier de sa face 312 distale, ainsi qu'une partie extrémité 322 distale, opposée à la partie 320 proximale, destinée à être fixée à la deuxième pièce 20, par soudage électrique par résistance ou par friction. La partie d'extrémité 322 présente une surface de soudage 324, qui est destinée au soudage du corps 32 de l'insert 30 sur la deuxième pièce 20. La surface de soudage 324 délimite avantageusement une section transverse décroissante ; elle peut être par exemple sphérique, conique ou tronconique. Le corps 32 peut ainsi présenter un différentiel de section dans une direction distale, afin de concentrer de manière très localisée la chaleur après que le soudage ait été amorcé. La surface de soudage 324 peut être terminée par une amorce (non représentée).

L'insert 30 est avantageusement destiné à permettre un soudage électrique par résistance, aussi appelé soudage par point électrique (PSE). Ainsi, l'insert 30 est adapté pour être parcouru par un courant électrique afin de permettre un soudage de l'insert 30 et de la deuxième pièce 20, la première pièce 10 restant maintenue assemblée à la deuxième pièce 20 par l'insert 30. Ainsi, la tête 31 et le corps 32 sont configurés pour permettre la circulation d'un courant électrique depuis la face 310 proximale jusqu'à la surface 324 de soudage.

En particulier, la tête 31 et le corps 32 de l'insert 30 comprennent un matériau électriquement conducteur, par exemple métallique. L'insert 30, et notamment la tête 2 et/ou le corps 4, peut ainsi comprendre de l'acier, de l'aluminium, du titane ou du cuivre.

Selon une possibilité, la tête 31 peut comprendre un premier matériau et le corps 32 peut comprendre un deuxième matériau distinct du premier matériau, notamment de résistivité électrique supérieure à celle du premier matériau, de manière à créer un différentiel de résistivité électrique entre la tête 31 et le corps 32, afin de localiser la puissance électrique, donc la chaleur générée, au centre de l'insert 30. Par exemple, la tête 31 comprend de l'aluminium, le corps 32 de l'acier.

Le corps 32 peut avantageusement comprendre plusieurs matériaux ayant des résistivités électriques différentes : par exemple, la partie d'extrémité 322 distale peut comprendre un matériau de résistivité électrique supérieure au reste du corps 32.

Le procédé d'assemblage selon l'invention comprend une étape de d'intégation de l'insert 30 dans la première pièce 10, une étape de conformation de la première ou deuxième pièce 10, 20 en vue de créer une zone 50 de découplage au moins autour de la partie d'extrémité 322 du corps 32 de l'insert 30, et une étape fixation de l'insert 30, plus précisément de sa partie d'extrémité 322, à la deuxième pièce 20 afin de réaliser l'assemblage des première et deuxième pièces 10, 20.

L'étape d'intégration de l'insert 30 à la première pièce 10 peut être réalisée avant, après ou simultanément à l'étape de conformation de la zone 50 de découplage.

L'étape d'intégration de l'insert 30 peut être effectuée en reprise, notamment par déformation d'une partie de l'insert 30 ou de la première pièce 10, par exemple par sertissage ou rivetage. L'insert 30 peut également être vissé ou inséré en pivotement dans la première pièce 10, notamment si l'insert 30 est pourvu de saillies comme des ergots ou des crans destinés à venir en prise avec la première pièce 10. L'étape d'intégration peut être réalisée lors d'une opération de ferrage.

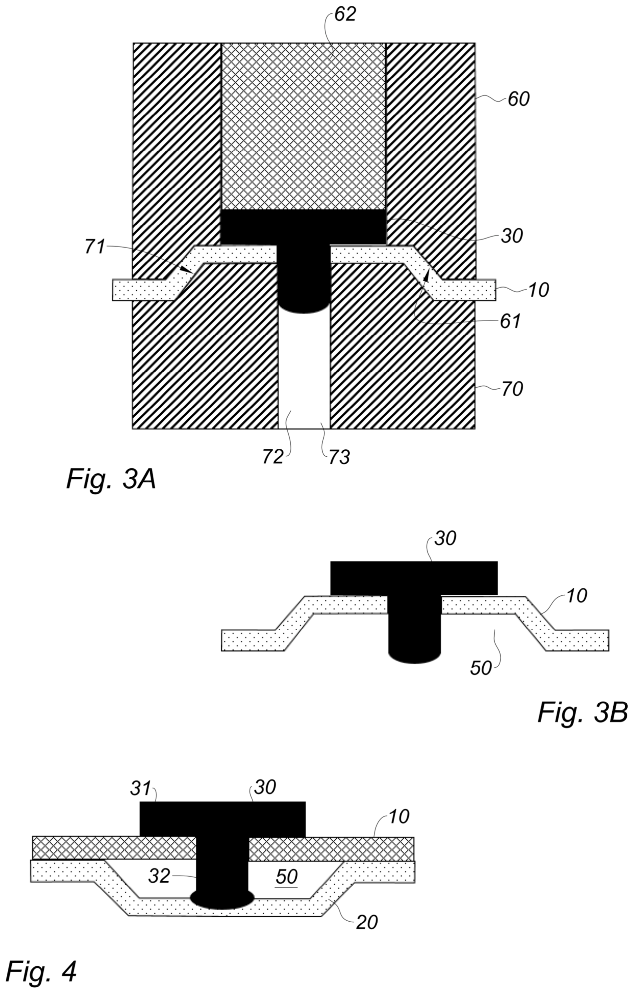

Par ailleurs, l'étape d'intégration peut comprendre une découpe de la première pièce 10 pour matérialiser un logement qui permettra l'implantation de l'insert 1, notamment dans le cas d'une première pièce 100 en composite, réalisée sur la base d'une structure ou d'un renfort à base de fibres longues structurées ou non. L'étape de découpe peut être effectuée à la fermeture d'un moule ou d'un outillage, c'est-à-dire lors de la formation de la première pièce 10, par exemple au moyen d'un tube creux destiné à découper un morceau ou riblon de matière dans la première pièce 10. Une évacuation de ce morceau ou riblon de matière peut être effectuée avant ouverture du moule ou de l'outillage, via l'intérieur du tube ayant généré la découpe. L'évacuation peut être réalisée au moyen de l'insert 30 qui, lors de son insertion à l'intérieur du trou généré par la découpe, vient pousser le morceau ou riblon dans le tube. La découpe d'un morceau ou riblon de matière peut concerner également une première pièce 10 métallique (figures 3A à 5B), par exemple en aluminium, qui est réalisée par découpe-emboutissage, notamment dans un outillage de type presse transfert

L'étape de conformation de la zone 50 de découplage peut être réalisée par réservation d'un espace libre, par exemple au moyen d'un noyau, destiné à recevoir le corps 32 de l'insert 30, en particulier au moment de la formation de la première pièce 10, ou le cas échéant de la deuxième pièce 20. Ainsi, cette étape peut être concomitante à la formation de la première pièce 10 ou de la deuxième pièce 20.

L'étape de conformation de la zone 50 de découplage peut alternativement être réalisée par déformation plastique de la première pièce 10 ou de la deuxième pièce 20. Ainsi, cette étape peut être postérieure à la formation de la première pièce 10 ou de la deuxième pièce 20.

Selon l'exemple des figures 1A à 1C, le procédé comprend une étape d'injection pour former la première pièce 10. L'intégration de l'insert 30 dans la première pièce 10 est ici concomitante avec la formation de la première pièce 10, c'est-à-dire avec l'étape d'injection.

Comme illustré sur la figure 1A, l'insert 30 est placé dans un moule 100 destiné à l'injection de la première pièce 10. Le procédé comprend une étape de positionnement de l'insert 30 dans le moule 100 avant injection de la matière destinée à former la première pièce 10. Cette étape de positionnement comprend l'insertion du corps 32 dans un noyau 40 équipant le moule 100 et destiné à réserver une zone de découplage autour du corps 32 lors de la formation de la première pièce 10, c'est-à-dire au cours de l'injection, en empêchant la matière injectée de venir au contact du corps 32, et en particulier de la partie d'extrémité 322, comme illustré sur la figure 1B. Le noyau 40, ici en forme de tube creux, de préférence cylindrique, présente une ouverture 42 permettant à au moins une partie ou à la totalité du corps 32 de l'insert 30 d'être insérée à l'intérieur du noyau 40 à la fermeture du moule 100. De préférence, l'intérieur du noyau 40 et le corps 32 de l'insert 30 ont une forme complémentaire. Le noyau 40 peut avantageusement venir en butée contre la tête 2, et plus précisément contre la face 312 distale, une fois le moule 100 fermé. L'insert 30 peut donc être surmoulé et ainsi lié à la première pièce 10. Ce surmoulage peut-être accompagné d'une déformation de l'insert 30 pour renforcer l'interaction mécanique entre l'insert 30 et la première pièce 10.

Après injection, la première pièce 10, équipée de l'insert 30, présente une zone 50 de découplage autour du corps 32 de l'insert 30. Dans une étape ultérieure, la partie d'extrémité 322 est fixée à la deuxième pièce 20, par exemple par soudage électrique par résistance, en vue d'assembler les première et deuxième pièces 10, 20.

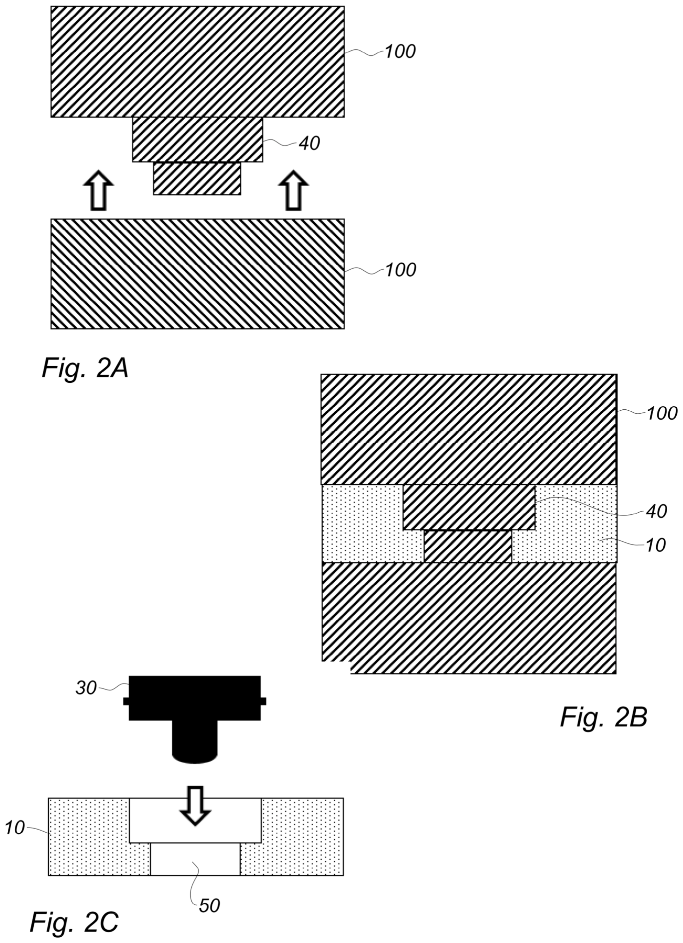

Selon l'exemple des figures 2A à 2C, le procédé comprend une étape d'injection pour former la première pièce 10. L'intégration de l'insert 30 dans la première pièce 10 est ici postérieure à la formation de la première pièce 10, c'est-à-dire à l'étape d'injection.

Le moule 100 est pourvu d'un noyau 40 configuré pour réserver une zone 50 de découplage, lors de la formation de la première pièce 10, c'est-à-dire au cours de l'injection, comme illustré sur la figure 2B. Le noyau 40 peut être aussi configuré pour réserver une place pour l'insertion de l'insert 30 dans la première pièce 10. Ainsi, le noyau 40 peut présenter une forme similaire à celle de l'insert 30, à l'exception de la partie correspondant au corps 32, qui doit être plus large que le corps 32 afin de conformer la zone 50 de découplage autour du corps 32. Après injection, comme visible sur la figure 2C, la première pièce 10 comprend la zone 50 de découplage, et peut avantageusement comprendre un logement 12 destiné à recevoir l'insert 30, en particulier la tête 31. Le procédé comprend ensuite l'intégration en reprise de l'insert 30 illustrée à la figure 2C. Cette étape d'intégration comprend le positionnement du corsp 32 dans la zone 50 de découplage formée par la première pièce 10. Le procédé comprend ensuite l'étape de fixation de la partie d'extrémité 322 à la deuxième pièce 20, par exemple par soudage électrique par résistance.

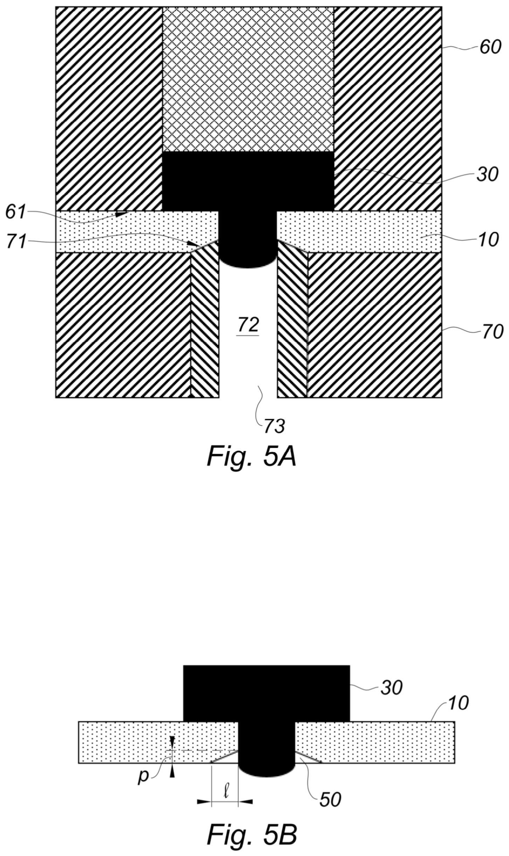

Selon l'exemple des figures 3A, 3B, 4 et 5A, 5B, l'étape de conformation de la zone 50 de découplage est réalisée par déformation de la première pièce 10 (figures 3A, 3B, 5A, 5B) et/ou de la deuxième pièce 20 (figure 4). Par exemple, cette déformation peut être obtenue par emboutissage (figures 3A, 3B, 4) ou par compression (figures 5A, 5B) de la première ou deuxième pièce 10, 20. L'étape d'intégation de l'insert 30 dans la première pièce 10 peut avoir lieu avant l'étape de conformation de la zone 50 de découplage (figures 3A, 3B, 5A), par exemple lorsque c'est la première pièce 10 qui est conformée pour ménager la zone 50 de découplage, ou après (figure 4), par exemple lorsque c'est la deuxième pièce 20 qui est conformée pour ménager la zone 50 de découplage. L'étape de conformation de la zone 50 de découplage peut être réalisée au moyen d'un outillage comprenant une première partie 60 et une deuxième partie 70 destinées à être pressées l'une contre l'autre pour conformer la zone 50 de découplage. La première partie 60 comprend une face 61 de conformation qui peut être plane (figure 5A) ou qui peut être concave (figure 3Aà pour former une cavité. La deuxième partie 70 comprend une face 71 de conformation qui forme une excroissance destinée à déformer la première ou deuxième pièce 10, 20 lorsque cette première ou deuxième pièce 10, 20 est positionnée entre les faces 61, 71 de conformation et que les première et deuxième parties 60, 70 de l'outillage sont pressées l'une contre l'autre. La première partie 60 peut présenter un logement 62, par exemple un conduit pouvant notamment déboucher de part et d'autre de la premire partie 60, destiné à loger l'insert 30, notamment sa tête 31. La deuxième partie 70 peut présenter un conduit 72 destiné à recevoir le corps 32 de l'insert 30. Ce conduit 72 peut permettre de recevoir des découpes réalisées à travers la première pièce 10. Le conduit 72 présente avantageusement une ouverture d'évacuation 73 pour évacuer ces découpes.

La zone 50 de découplage est destinée à être interposée entre la partie d'extrémité 322 et la première pièce 100. La zone 50 de découplage est avantageusement une cavité. Cette cavité comprend un matériau thermiquement isolant, notamment de l'air. La zone 50 de découplage s'étend tout autour du corps 32, et notamment tout autour au moins de la partie d'extrémité 322. La zone 50 de découplage forme un anneau de découplage s'étendant à 360° autour du corps 32. La zone 50 de découplage peut comprendre une pièce, éventuellement rapportée, ou un revêtement, en matériau thermiquement isolant, par exemple en céramique, pouvant le cas échéant être positionnée en partie ou en totalité à l'intérieur de la cavité formée dans la première pièce 10 ou la deuxième pièce 20.

On remarquera que le corps 32 peut être configuré pour dépasser par rapport à une face de la première pièce 10, comme illustré par exemple à la figure 1C, après intégration de l'insert 30 dans cette première pièce 10. Le surplus de matière du corps 32, dépassant de la face inférieure de la première pièce 10, vient se répartir radialement dans la zone 50 de découplage lors de l'opération de soudage sur la deuxième pièce 20. La cavité formant la zone 50 de découplage augmente donc la plage de compatibilité d'épaisseur de l'insert 30 avec la première pièce 10. De plus, ce dépassement du corps 32 par rapport à la première pièce 10 permet le nourrissement du bain de fusion formé entre la partie d'extrémité 322 et la deuxième pièce 20 lors de l'opération de soudage, c'est-à-dire que le bain de soudage est alimenté par la matière du corps 32. Cela permet l'obtention d'une meilleure qualité de soudage et évite un phénomène dit «de collage » susceptible de rendre la liaison fragile et peu résistante.

En référence à la figure 1C, la zone 50 de découplage peut notamment présenter une profondeur p égale ou supérieure à 0,06 fois le diamètre ou la largeur du corps 32 de l'insert 30. La zone 50 découplage peut par ailleurs présenter une largeur radiale I, c'est-à-dire une distance séparant le corps 32 de la première pièce 10 dans un plan orthogonale à l'axe A, égale ou supérieure à 0,2 fois le diamètre ou la largeur du corps 32 de l'insert 30.

L'étape de fixation de l'insert 30 à la deuxième pièce 20 est avantageusement réalisé par soudage électrique par résistance. Une électrode de soudage (non représentée) est appliquée sur l'insert 30 ou sa tête 31, plus précisément sur la face 310 proximale. Cette électrode de soudage peut avantageusement présenter une section supérieure ou égale à la section de la tête 31.

L'étape de fixation peut comprendre l'application d'une seconde électrode de soudage (non représentée), sur la deuxième pièce 20, plus particulièrement en regard de l'insert 30. La section ou les dimensions, notamment le diamètre, de cette seconde électrode peut être plus faible que la section ou les dimensions, notamment le diamètre, de l'électrode appliquée à sur l'insert 30, par exemple similaire à la section ou aux dimensions, comme le diamètre, du corps 32 de l'insert 30.

A noter que l'étape de fixation peut cependant comprendre l'utilisation d'une seule électrode de soudage correspondant à l'électrode de soudage appliquée sur la tête 31 de l'insert 30, afin de réaliser un soudage mono-accès. Dans le cas où une seule électrode est utilisée, la deuxième pièce 20, ou le cas échéant une pièce en appui direct ou indirect contre à la deuxième pièce 20 comme une troisième tôle ou quatrième tôle, est par exemple reliée à la masse ou à une polarité opposée.

La cavité formée par la zone 50 de découplage permet, lors de l'étape de fixation, un flambage de la deuxième pièce 20. La partie de cette deuxième pièce 20 qui est en regard de l'insert 30 se déforme en bombant vers l'intérieur de la zone 50 de découplage au fur et à mesure du soudage. Cette déformation résulte de la consommation de la matière du corps 32 et de l'effet de pincement exercé par les électrodes, compensant la réduction de la longueur du corps 32. Ainsi, une tension tendant à plaquer la première pièce 10 et la deuxième pièce 20 est emmagasinée lors de l'étape de fixation.

Le procédé peut comprendre une étape de refroidissement de l'insert 30, comprenant notamment la circulation d'un fluide de refroidissement, comme de l'air, et plus précisément de l'air comprimé, à travers un conduit de l'électrode de soudage, et sa projection en direction de l'insert 30, notamment de la tête 31. Le fluide de refroidissement peut ensuite à travers des canaux d'évent, ménagés sur la tête 31, plus précisément sur la face 310 proximale, ou sur l'électrode de soudage. Le refroidissement peut être effectué par amenée du fluide de refroidissement, notamment de manière centrale, par l'intérieur de l'électrode de soudage, par l'extérieur de l'électrode de soudage, de manière périphérique, par exemple au moyen de buses agencées autour de l'électrode de soudage. L'étape de refroidissement a lieu préférentiellement pendant, et/ou après, l'étape de fixation, c'est-à-dire pendant et/ou après la circulation d'un courant électrique à travers l'insert 30.

Le procédé peut comprendre une étape de collage de la première pièce 10 et de la deuxième pièce 20. Cette étape de collage peut avoir lieu avant l'étape de fixation de l'insert 30 sur la deuxième pièce 20. Cette étape de fixation soudage peut intervenir avant séchage et/ou réticulation de la colle. Plus particulièrement, l'étape de collage peut comprendre : un dépôt de colle sur la première et/ou la deuxième pièce 10, 20, puis le cas échéant une localisation des première et deuxième pièces 10, 20 l'une par rapport à l'autre, et une étape consistant à exercer une pression sur l'insert 30 afin de matérialiser un accostage, c'est-à-dire une mise en contact, entre les première et deuxième pièces 10 et 20, cette étape de mise en pression ayant lieu de préférence au moment de la fixation de l'insert 30 sur la deuxième pièce 20. La colle peut sécher ou réticuler au cours de cette étape de fixation ou d'étapes ultérieures, comme par exemple une étape de traitement de type cataphorèse.

Bien entendu, l'invention n'est nullement limitée au mode de réalisation décrit ci-dessus, ce mode de réalisation n'ayant été donné qu'à titre d'exemple. Des modifications sont possibles, notamment du point de vue de la constitution des divers éléments ou par la substitution d'équivalents techniques, sans sortir pour autant du domaine de protection de l'invention.

Ainsi, le procédé pourrait permettre l'assemblage de plus de deux pièces 10, 20. Les cas échéant, ces pièces, ou tôles, sont empilées, la tête de l'insert pouvant être fixée à une des deux tôles d'extrémité tandis que la partie d'extrémité du corps de l'insert est fixée à l'autre des deux tôles d'extrémité.

## Revendications

1. Procédé d'assemblage d'une première pièce (10) et d'une deuxième pièce (20) par l'intermédiaire d'un insert (30) comprenant une tête (31) destinée à venir en appui sur la première pièce (10) et un corps (32) comprenant une partie d'extrémité (322) destinée à être soudée à la deuxième pièce (20), **caractérisé en ce que** le procédé comprend, avant fixation de la partie d'extrémité (322) du corps (32) de l'insert (30) sur la deuxième pièce (20), une étape d'injection pour former la première pièce (10) pour ménager une zone (50) de découplage autour de cette partie d'extrémité (322).

2. Procédé selon la revendication précédente, dans lequel la zone (50) de découplage est une cavité d'air.

3. Procédé selon l'une des revendications précédentes, dans lequel la zone (50) de découplage s'étend de manière annulaire autour du corps (32).

4. Procédé selon l'une des revendications précédentes, dans lequel le procédé comprend une étape d'intégration de l'insert (30) dans la première pièce (10).

5. Procédé selon la revendication précédente, dans lequel l'étape d'intégration de l'insert (30) dans la première pièce (10) et l'étape de conformation de la première pièce (10) en vue de ménager la zone (50) de découplage sont concomitantes.

6. Procédé selon la revendication 4, dans lequel l'étape d'intégration de l'insert (30) dans la première pièce (10) est antérieure à l'étape de conformation de la première ou de la deuxième pièce (10, 20) en vue de ménager la zone (50) de découplage.

7. Procédé selon la revendication 4, dans lequel l'étape d'intégration de l'insert (30) dans la première pièce (10) est postérieure à l'étape de conformation de la première ou de la deuxième pièce (10, 20) en vue de ménager la zone (50) de découplage.

8. Procédé selon la revendication 4, dans lequel l'étape d'intégration comprend une étape de découpe, à travers la première pièce (10), d'un trou destiné au passage du corps (32) de l'insert (30).

9. Procédé selon l'une des revendications précédentes, dans lequel la zone (50) de découplage est formée par réservation d'un espace libre destiné à recevoir le corps (32) de l'insert (30).

10. Procédé selon l'une des revendications précédentes, dans lequel la partie d'extrémité (322) du corps (32) de l'insert (30) est fixée à la deuxième pièce (20) par soudage électrique par résistance.
